Europäisches Patentamt

European Patent Office

Office européen des brevets

(19)

(11) Veröffentlichungsnummer: **0 069 158 B1**

(12) **EUROPÄISCHE PATENTSCHRIFT**

(45) Veröffentlichungstag der Patentschrift:
**02.01.85**

(51) Int. Cl.³: **B 21 D 37/14, B 23 Q 3/155**

(21) Anmeldenummer: **81105143.2**

(22) Anmeldetag: **02.07.81**

(54) Werkzeugwechseleinrichtung zum automatischen Wechseln der Werkzeuge einer Umformpresse.

(43) Veröffentlichungstag der Anmeldung:
**12.01.83 Patentblatt 83/2**

(45) Bekanntmachung des Hinweises auf die Patenterteilung:
**02.01.85 Patentblatt 85/1**

(84) Benannte Vertragsstaaten:
**AT BE CH FR GB IT LI NL**

(56) Entgegenhaltungen:
**DE - A - 2 019 359**
**DE - A - 2 033 991**
**DE - A - 2 609 337**
**DE - A - 2 700 502**
**DE - A - 2 740 042**
**DE - A - 2 900 526**
**US - A - 3 052 999**
**US - A - 3 163 291**
**US - A - 3 173 204**
**US - A - 3 187 123**

(73) Patentinhaber: **L. SCHULER GmbH,**
**Bahnhofstrasse 41 - 67 Postfach 1222,**
**D-7320 Göppingen (DE)**

(72) Erfinder: **Fiamme, Walter, Tannenweg 17,**
**D-5144 Wegberg-Beeckerheide (DE)**
Erfinder: **Rahn, Oskar, Pastoratsbenden 14,**
**D-4152 Kempen 3 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft eine Werkzeugwechseleinrichtung zum automatischen Wechseln der Werkzeuge für Stempel und Matrize einer Mehrstufenpresse mit einem Magazin, in dessen Halterungen die Werkzeuge in gleicher Anordnung wie in der Presse selbst paarweise in geraden Reihen einander gegenüberstehend eingesetzt sind, und mit einem zwei einander gegenüberliegend angeordnete Greifer tragenden Greiferarm, der Werkzeuge nur zwischen korrespondierenden Plätzen in dem Magazin und der Presse wechselt.

Aufgrund der Wirkungsweise einer solchen bekannten Werkzeugwechseleinrichtung (DE-A-2 740 042) besteht, falls die Werkzeuge sich in richtiger Anordnung in dem Magazin befinden, allerdings nicht die Gefahr, daß die Werkzeuge bei dem Wechseln zwischen dem Magazin und der Mehrstufenpresse vertauscht und demzufolge die Werkzeuge in falscher Anordnung in die Mehrstufenpresse eingesetzt werden. Die Gefahr bei dieser bekannten Werkzeugwechseleinrichtung besteht vielmehr darin, daß die Werkzeuge schon in falscher Anordnung in den Halterungen des Magazins sitzen und dann unvermeidbar auch in falscher Anordnung durch die Werkzeugwechseleinrichtung in die Mehrstufenpresse eingewechselt werden.

Der Erfindung liegt daher die Aufgabe zugrunde, Fehler schon bei der Beschickung des Magazins der Werkzeugwechseleinrichtung aufzudecken und sofort anzuzeigen oder sonstwie erkennbar zu machen.

Diese Aufgabe ist erfindungsgemäß dadurch gelöst, daß die Werkzeuge unterschiedliche Kodierungen und die Halterungen elektrische oder elektronische Kodierleseeinrichtungen aufweisen, die mit einem Vergleicher zum Vergleich der mittels der Kodierleseeinrichtung gemessenen mit vorgegebenen Kodierungen verbunden sind, wobei der Vergleicher eine Anzeige zur Abgabe eines Störsignals bei Abweichung der gemessenen von der vorgegebenen Kodierung aufweist. Mit dieser elektrischen oder elektronischen Kontrolleinrichtung können Fehler bei der Beschickung des Magazins praktisch vollständig vermieden werden, da bei fehlerhafter Beschickung sofort eine Störsignalanzeige erfolgt. Die Eingabe der vorgegebenen Kodierung kann dabei durch entsprechende Programmierung so erfolgen, daß hier ebenfalls Fehler ausgeschlossen sind.

Die Sicherstellung der richtigen Anordnung der Werkzeuge in dem Magazin ist besonders für den Bereich der letzten Stufen einer Mehrstufenpresse sehr wichtig, weil die dort verwendeten Werkzeuge sich äußerlich oft nur wenig unterscheiden und Fehler daher visuell kaum festgestellt werden können. Die Sicherstellung der richtigen Anordnung der Werkzeuge im Magazin bringt außerdem den Vorteil mit sich, daß der eigentliche Werkzeugwechsel zwischen dem Magazin und der Presse keiner Überwachung auf Richtigkeit der Werkzeuge mehr bedarf, da der Greiferarm die Werkzeuge ohnehin nur zwischen korrespondierenden Plätzen in dem Magazin und der Presse wechselt.

Bekannt ist auch schon eine nicht speziell für Mehrstufenpressen bestimmte Werkzeugwechseleinrichtung (DE-A-2 609 337), bei der an jedem Magazinplatz eine von einem Fühler abtastbare Belegt-Markierung vorgesehen ist, die bei der Bestückung des Magazins mit Werkzeugen in Abhängigkeit von der Belegung des jeweiligen Magazinplatzes mit einem Werkzeug setzbar ist und bei Entnahme des Werkzeuges zum Arbeiten in der Werkzeugmaschine gesetzt bleibt. Ferner sind dort an dem Magazin Fühler für das Vorhandensein eines Werkzeuges in dem Magazinplatz, Werkzeugplatz-Kodierungen und Fühler zur Abtastung einer Werkzeug-Kodierung vorgesehen. Hierbei wird aber nur angestrebt, daß jedes Werkzeug mit Sicherheit wieder an dem Magazinplatz abgelegt wird, aus dem es entnommen wurde. Eine Sicherstellung einer bestimmten Anordnung der Werkzeuge in dem Magazin ist bei der bekannten Werkzeugwechseleinrichtung nicht erforderlich und diesem Zweck sind die genannten Mittel auch nicht dienlich.

Bei einer bekannten Mehrstufenpresse mit Werkzeugwechseleinrichtung (DE-A-2 900 526) sind auch schon Meßfühler zum Kontrollieren und Beeinflussen des Werkzeugwechselvorganges vorgesehen, die jedoch auch nicht der Sicherstellung einer bestimmten Anordnung verschiedener Werkzeuge in einem Magazin dienen.

In Ausbildung der Erfindung ist vorgesehen, daß die Vorgabe der Kodierung einstellbar ist. Auf diese Weise kann die Kontrolleinrichtung auf andere Werkzeugsätze umgestellt werden. Dabei sollte die Vorgabe der Kodierungen nur für einen ganzen Werkzeugsatz einstellbar sein, damit nicht in der Reihenfolge der Werkzeuge in einem Werkzeugsatz Fehler auftreten können.

Die Erfindung sieht ferner vor, daß der Vergleicher zusätzlich eine Freigabeanzeige aufweist, wodurch die Sicherheit noch erhöht wird.

Als Kodierleseeinrichtung kann ein berührungslos arbeitender Reihengrenztaster vorgesehen werden, wobei die Kodierungen als Vertiefungen in den Werkzeugen ausgebildet sind. Derartige Reihengrenztaster sind in dem Stande der Technik bekannt und haben sich durch zuverlässige Funktion sehr bewährt. Die Vertiefungen in den Werkzeugen können dabei als in die Werkzeuge eingelassene Lochplatten ausgebildet sein, wobei die Löcher die Kodierung bilden.

In der Zeichnung ist die Erfindung anhand eines Ausführungsbeispiels näher veranschaulicht. Es zeigt

Fig. 1 die Seitenansicht eines Magazins einer Werkzeugwechseleinrichtung und

Fig. 2 einen Teillängsschnitt durch eine Halterung des Magazins gemäß Fig. 1.

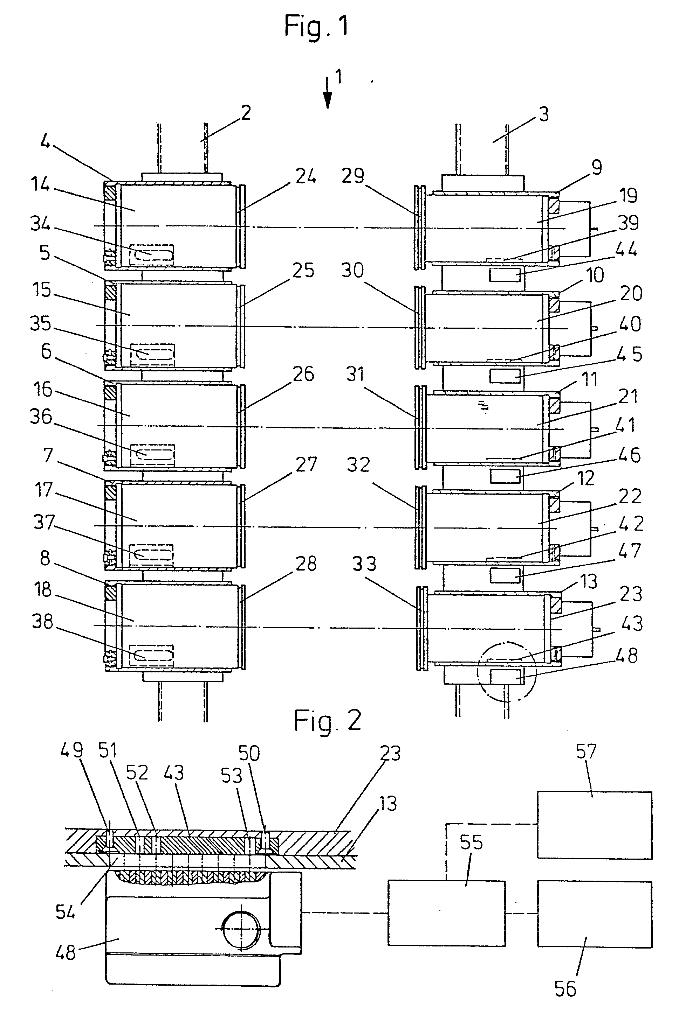

Fig. 1 zeigt das Magazin 1 einer Werkzeugwechseleinrichtung für eine Umformpresse. Der Greifer der Werkzeugwechseleinrichtung und die Umformpresse selbst sind der Übersichtlichkeit halber weggelassen, da diese grundsätzlich aus der US-PS 4 205 427 bekannt sind.

Das Magazin besteht aus zwei Haltesäulen 2, 3 an denen jeweils vier rohrförmige Halterungen 4 bis 8 bzw. 9 bis 13 jeweils untereinander befestigt sind. Die Anordnung dieser Halterungen 4 bis 8 bzw. 9 bis 13 ist dabei identisch mit den entsprechenden Werkzeugaufnahmen in der Umformpresse. Aus der Anzahl der Halterungen 4 bis 8 bzw. 9 bis 13 ist zu ersehen, daß es sich bei der Umformpresse um eine Fünfstufenpresse handelt.

In die Halterungen 4 bis 8 bzw. 9 bis 13 sind jeweils Werkzeuge 14 bis 23 eingesetzt, und zwar in dieser Ansicht links die Matrizenwerkzeuge 14 bis 18 und rechts die Stempelwerkzeuge 19 bis 23. An ihren jeweils herausragenden Enden tragen sie ringförmige Nuten 24 bis 33 in die der Greifer des hier nicht gezeigten Greiferarms einfassen und dann die betreffenden Werkzeuge 14 bis 23 aus den Halterungen 4 bis 13 herausziehen kann.

In jedes Werkzeug 14 bis 23 sind in den Mantel Kodierplatten 34 bis 43 eingelassen, die bei voll eingeschobenem Werkzeug 14 bis 23 jeweils einem an den Halterungen 4 bis 13 angebrachten Reihengrenztaster 44 bis 48 gegenüberliegen, von denen hier nur die in dieser Ansicht an der rechten Haltesäule 3 angebrachten zu sehen sind. Die genaue Ausgestaltung der Kodierplatten 34 bis 43 und der Reihengrenztaster 44 bis 48 zeigt dabei Fig. 2.

Fig. 2 stellt einen Längsschnitt durch die Halterung 13, begrenzt auf den in Fig. 1 eingezeichneten Kreis dar. Sie zeigt die Außenwandung des Werkzeugs 23, in die die Kodierplatte 43 eingelassen und mit zwei Senkschrauben 49, 50 befestigt ist. Die Kodierungen der Kodierplatten 44 bis 48 bestehen dabei aus Bohrungen, die verschieden angeordnet sein können. Im gezeigten Beispiel sind insgesamt drei Bohrungen 51, 52, 53 vorhanden, die zueinander verschiedene Abstände haben.

Die Halterung 13 weist im Bereich der Kodierplatte 43 einen Durchgangsschlitz 54 auf, vor dem — außen angesetzt — der Reihengrenztaster 48 angeordnet ist. Dieser Reihengrenztaster 48 erzeugt auf die Kodierplatte 43 gerichtete, hochfrequente Wechselfelder, die auf die Löcher 51, 52, 53 durch Spannungsanstieg reagieren, weil dort keine Energie entzogen wird. Der Reihengrenztaster 48 kann also die Kodierung aufgrund der Bohrungen 51, 52, 53 durch Umwandlung in elektrische Spannungsänderungen »lesen«.

Das «Leseergebnis« gibt der Reihengrenztaster 48 an einen elektronischen Vergleicher 55 weiter. Der Vergleicher 55 ist wiederum an einen Kodierschalter 56 angeschlossen. An diesem Kodierschalter 56 können die gewünschten Werkzeuge durch Eingabe ihrer Kodierungen eingestellt werden. Durch entsprechende Programmierung kann dabei dafür gesorgt werden, daß ein Satz Werkzeuge nur in der richtigen Reihenfolge und die dazugehörenden Stempel- und Matrizenwerkzeuge nur passend zueinander eingegeben werden können.

Die Eingabewerte werden dann im Vergleicher 55 mit den tatsächlichen, durch die Reihengrenztaster 44 bis 48 gemessenen Werten verglichen. Stimmen die gemessenen mit den vorgegebenen Kodierungswerten überein, so sitzen die einzelnen Werkzeuge 14 bis 23 in den jeweils richtigen Halterungen 4 bis 13. Über die Anzeige 57, die ebenfalls mit dem Vergleicher 55 verbunden ist, wird dann ein Freigabesignal abgegeben.

Ergeben sich zwischen den gemessenen und den vorgegebenen Kodierungswerten Abweichungen, so sitzt zumindest ein Werkzeug 14 bis 23 nicht in der richtigen Halterung 4 bis 13 oder gehört überhaupt nicht in das Magazin 1. Über die Anzeige 57 erfolgt dann ein Störsignal, wobei durch entsprechende Schaltungen und Störsignalanzeigen sofort das falsch sitzende Werkzeug ermittelt werden kann. Auf diese Weise ist sichergestellt, daß das Magazin 1 immer richtig beschickt wird, so daß sowohl an den Werkzeugen als auch an der Umformpresse selbst keine Schäden mehr auftreten können.

**Patentansprüche**

1. Werkzeugwechseleinrichtung zum automatischen Wechseln der Werkzeuge (14 bis 23) für Stempel und Matrize einer Mehrstufenpresse mit einem Magazin (2 bis 3), in dessen Halterungen (4 bis 13) die Werkzeuge (14 bis 23) in gleicher Anordnung wie in der Presse selbst paarweise in geraden Reihen einander gegenüberstehend eingesetzt sind, und mit einem zwei einander gegenüberliegend angeordnete Greifer tragenden Greiferarm, der Werkzeuge (14 bis 23) nur zwischen korrespondierenden Plätzen in dem Magazin (2 bis 13) und der Presse wechselt, dadurch gekennzeichnet, daß die Werkzeuge (14 bis 23) unterschiedliche Kodierungen (51, 52, 53) und die Halterungen (4 bis 13) elektrische oder elektronische Kodierleseeinrichtungen (44 bis 48) aufweisen, die mit einem Vergleicher (55) zum Vergleich der mittels der Kodierleseeinrichtungen (44 bis 48) gemessenen mit vorgegebenen Kodierungen verbunden sind, wobei der Vergleicher (55) eine Anzeige (57) zur Abgabe eines Störsignals bei Abweichung der gemessenen von der vorgegebenen Kodierung aufweist.

2. Werkzeugwechseleinrichtung nach Anspruch 1, dadurch gekennzeichnet, daß die Vorgabe der Kodierungen einstellbar ist.

3. Werkzeugwechseleinrichtung nach Anspruch 2, dadurch gekennzeichnet, daß die Vorgabe der Kodierungen nur für einen ganzen Werkzeugsatz einstellbar ist.

4. Werkzeugwechseleinrichtung nach einem der Ansprüche 1 bis 3, dadurch gekennzeichnet, daß der Vergleicher (55) zusätzlich eine Freigabeanzeige (57) aufweist.

5. Werkzeugwechseleinrichtung nach einem der Ansprüche 1 bis 4, dadurch gekennzeichnet, daß die Kodierleseeinrichtung als berührungslos arbeitende Reihengrenztaster (44, bis 48) und die Kodierungen als Vertiefungen (51, 52, 53) in den Werkzeugen (14 bis 23) ausgebildet sind.

6. Werkzeugwechseleinrichtung nach Anspruch 5, dadurch gekennzeichnet, daß die Vertiefungen durch eine in das Werkzeug eingelassene Lochplatte (43) gebildet sind, wobei die Löcher (51, 52, 53) die Kodierung bilden.

**Claims**

1. Mould-changing device for the automatic changing of the male and female moulds (14 or 23) of a multi-stage press comprising a magazine (2 to 3), into the holders (4 to 13) of which the moulds (14 to 23) are inserted in the same arrangement as in the press itself in pairs and opposite to each other in straight rows, and a gripper arm, which carries two grippers arranged opposite to each other, which arm changes moulds (14 to 23) only between corresponding places in the magazine (2 to 13) and the press, characterised in that the moulds (14 to 23) have different codings (51, 52, 53) and the holders (4 to 13) have electric or electronic coding-reading devices (44 to 48) which are connected to a comparator (55) for comparing the codings measured by means of the coding-reading devices (44 to 48) with predetermined codings, the comparator (55) being provided with a display (57) for emitting a fault signal if the measured coding deviates from the predetermined coding.

2. Mould-changing device according to Claim 1, characterised in that the setting of the codings is adjustable.

3. Mould-changing device according to Claim 2, characterised in that the setting of the codings is adjustable only for a complete set of moulds.

4. Mould-changing device according to one of Claims 1 to 3, characterised in that the comparator (55) is additionally provided with a release indicator (57).

5. Mould-changing device according to one of Claims 1 to 4, characterised in that the coding-reading devices are constructed as multi-limit switches (44 to 48) and the codings are constructed as recesses (51, 52, 53) in the moulds (14 to 23).

6. Mould-changing device according to Claim 5, characterised in that the recesses are formed by a perforated plate (43) which is set into the mould, the holes (51, 52, 53) forming the coding.

**Revendications**

1. Dispositif de changement d'outils pour changer automatiquement les outils (14 à 23) de poinçon et de matrice d'une presse à plusieurs étages ou postes de travail, comprenant un magasin (2, 3) avec des supports d'outil (4 à 13), dans lesquels les outils (14 à 23) sont disposés les uns en face des autres par paires dans des rangées droites, selon la même disposition que dans la presse même et comprenant un bras préhenseur, portant deux pinces opposées, qui change les outils (14 à 23) uniquement entre les positions correspondantes dans le magasin (2, 3) et dans la presse, caractérisé en ce que les outils (14 à 23) présentent des codes (51, 52, 53) différents et les supports d'outil (4 à 13) présentent des dispositifs électriques ou électroniques lecteurs de code (44 à 48), lesquels sont connectés à un comparateur (55) pour comparer les codes relevés par les lecteurs de code avec des codes introduits préalablement, le comparateur présentant un visuel (57) pour délivrer un signal de dérangement au cas où les codes relevés diffèrent des codes introduits préalablement.

2. Dispositif de changement d'outils selon la revendication 1, caractérisé en ce que l'introduction préalable des codes est variable.

3. Dispositif de changement d'outils selon la revendication 2, caractérisé en ce que l'introduction préalable des codes est seulement variable pour un jeu d'outils complet.

4. Dispositif de changement d'outils selon une des revendications 1 à 3, caractérisé en ce que le comparateur (55) présente en outre un dispositif d'indication (57) pour autoriser le fonctionnement.

5. Dispositif de changement d'outils selon une des revendications 1 à 4, caractérisé en ce que les dispositifs lecteurs de code sont des contacteurs limiteurs électroniques (44 à 48) et les codes sont des creux (51, 52, 53) ménagés dans les outils (14 à 23).

6. Dispositif de changement d'outils selon la revendication 5, caractérisé en ce que les creux sont formés par une plaque perforée (43) qui est encastrée dans l'outil et dont les perforations (51, 52, 53) forment le code.

0 069 158

Fig. 1

Fig. 2

5